# EUROPEAN PATENT SPECIFICATION

(11) **EP 1 261 737 B1**
(45) Date of publication and mention of the grant of the patent: **24.05.2006**
(21) Application number: 01910102.1
(22) Date of filing: 06.03.2001
(51) Int. Cl.: C12Q 1/68, G01N 21/25

(54) **METHOD FOR THE SIMULTANEOUS AND MULTIPLE DETECTION AND QUANTIFICATION OF THE HYBRIDIZATION OF MOLECULAR COMPOUNDS SUCH AS NUCLEIC ACIDS, DNA, RNA, PNA AND PROTEINS**
VERFAHREN FÜR DIE GLEICHZEITIGE UND MEHRFACHE DETEKTION UND QUANTIFIZIERUNG DER HYBRIDISIERUNG VON MOLEKÜLVERBINDUNGEN WIE NUKLEINSÄUREN, DNS, RNS, PNS UND PROTEINEN
PROCEDE PERMETTANT LA DETECTION ET LA QUANTIFICATION SIMULTANEES ET MULTIPLES DE L'HYBRIDATION DE COMPOSES MOLECULAIRES TELS QUE LES ACIDES NUCLEIQUES, L'ADN, L'ARN, LES POLYNUCLEAIRES AROMATIQUES ET LES PROTEINES

(30) Priority: 07.03.2000 IT CA000004
(43) Date of publication of application: 04.12.2002
(73) Proprietor: Caria, Mario Raimondo, 09125 Cagliari (IT)
(72) Inventor: Caria, Mario Raimondo, 09125 Cagliari (IT)
(74) Representative: Capasso, Olga
(86) International application number: PCT/IB2001/000406
(87) International publication number: WO 2001/066796

(56) References cited:
- EP-A- 0 665 293
- WO-A-99/27140
- WO-A-99/32654
- US-A- 5 872 623
- VO-DINH T: "DEVELOPMENT OF A DNA BIOCHIP: PRINCIPLE AND APPLICATIONS" SENSORS AND ACTUATORS B, ELSEVIER SEQUOIA S.A., LAUSANNE, CH, vol. B51, no. 1/2/3, 31 August 1998 (1998-08-31), pages 52-59, XP000669813 ISSN: 0925-4005
- VO-DINH T ET AL: "DNA BIOCHIP USING A PHOTOTRANSISTOR INTEGRATED CIRCUIT" ANALYTICAL CHEMISTRY, AMERICAN CHEMICAL SOCIETY. COLUMBUS, US, vol. 71, no. 2, 15 January 1999 (1999-01-15), pages 358-363, XP000825698 ISSN: 0003-2700

## Description

The invention covers the fields of molecular biology, medicine research, genome analysis, combinatorial chemistry, and in general the field of the analysis of matrices of molecules deposits on supports of various kinds. The invention relates to a method using devices known in the art as biochips-, microchips-, chips- arrays and micro-arrays.

Such devices usually comprise supports made of plastic, glass or somehow crystalline material, with or without a deposited film. Especially, the support may be made of glass, natural or synthetic, specifically treated or not, On said support, biologic material is deposited. Said support will be referred to from now on also with the commonly used term "slide". Said biologic material, usually DNA, cDNA, mRNA, PNA, protein or synthetic oligonucleotide or any complex of peptides, is deposited in a matrix geometrical arrangement (called micro-array or macro-array). The support is a few centimeters long, having a rectangular or squared shape and has a thickness of a few millimeters. The deposition is usually performed with systems suitable for micro- or nano- deposition, allowing deposits of the order of micrometers in a transversal direction parallel to the support plan. The distance among the positions of the deposits (also called "sites" in the following) can be up to some tens of micrometers from center to center. In the present systems, the most used sizes are of around 100 micrometers.

The deposits of biologic material are called "probes" and should be complementary to those with which they are intended to hybridize, called "targets". The analysis consists in verifying if a complementarity actually exists between the probes and targets and to which extent, both for every single site and for each site with respect to the others. If said complementarity exists, the hybridization process is considered to have taken place. The term *hybridization* is commonly used in many fields. In the following, it has the most extensive meaning and covers any kind of chemical association between the molecules forming the probes and the targets. The molecules may be proteins, nucleic acid, or any chemical or biological products. Hybridization may or may not occur. When occurring, it may do so to different extents. For example, if a gene study is carried out, a gene is said to be "expressed" to a smaller or larger extent in an organism or an individual. A gene expression cannot be found from every application.

In a broad sense, in order to measure such hybridization, the method may comprise a step of treating the targets. In their preparation, they are marked with coloring, fluorescent substances which emit light on a defined spectrum of wavelength or with substances emitting particles from radioactive decay. The so marked compounds, often comprised in a solution, are deposited on the support. There, some of the targets hybridize with some of the probes and remain attached thereto. By proceeding to a suitable washing of the slide, only the hybridized targets will remain attached to the probes on the support.

The analysis of the localization and the quantification of such hybridization starts at this point and forms the object of the present invention. Such analysis usually takes place through the detection of the particles emitted by the targets molecules in the hybridized sites. Such particles can be photons or electrons emitted by nuclear decay. In order for the marked molecules to emit photons, if they have been marked with fluorescent compounds such as Cy5, they must be excited at suitable wavelengths, by radiation from a suitable light or laser source.

The reading of the hybridization sites is used both to evaluate the expression of some genes and to determine the sequence by inserting suitable gene fragments. The present invention covers these applications and all those exploiting the use of the detection of hybridization sites.

By detection of hybridization sites, we mean here the detection of the position and/or the quantification of the hybridized molecules.

The most widespread method for the detection of the hybridization sites is based on fluorescence. In most of the present systems, a mechanical system performs the scanning of all the hybridization sites by irradiating them with a laser to excite the likeliest wavelength emission of the coloring. The detector collecting the light from this emission is usually a photomultiplier. This is the most widespread configuration. In most cases, systems with gas laser and bulky photomultipliers requiring also cooling are used. In the most updated systems, more compact semiconductor lasers and up to four fluorescent substances are used. Among the most recent trial systems are some performing detection with a CCD (Charge Coupled Device) detector always coupled with a laser system having convenient lenses and filters and a suitable cooling system.

The time required to analyze a support or slide remarkably depends on the number of sites, the number of fluorescent substances and on the cost of the equipment. The most widespread reading system has been developed by the company named Affymetrix. This system allows a limited use of probes. The time for scanning, reading and analyzing can be up to a few hours, with a minimum of a few dozen minutes. The same can be said for all the systems developed in a laboratory (such as "Pat Brown", P. O. Brown et al. "Exploring the new world of the genome with DNA microarrays" Nature Genetics suppl. vol. 21 33-37 (1999)). All those systems are slow and very expensive also because of the complex manufacture thereof and of the use of markers. Furthermore, in many laboratories, during the trial phase, the slides are still re-used. For this reason they must be washed and it is not always possible to have them completely cleaned, especially from the fluorescent substances, which presence in successive analysis counterfeits the results.

For example, fluorescent substances such as the common Cy3 or Cy5 do not always show the same attachment to the target, this depending from many physical and chemical factors such as thermodynamic conditions etc. Also the stechiometric occupation of the molecules may influence the hybridization capacity. All this, besides having an influence on the required quantity of the material, influences also the expression capacity.

With the sequencing of the human genome and of a large number of microorganisms, it will become more and more important to determine the difference of gene expression between organisms or cells submitted to various stimuli (for example, tumor cells vs normal cells, response of mammalian or bacterial cells to various drugs...).

A new technique is also destined to have an important development in the following years, namely proteomics. This technology intends to find both the function of the different proteins coded by the genes identified through systematic sequencing, and the different interactions existing between said proteins. The double-hybrid assay allows to detect the different proteins interacting with a "bait" protein. This technique necessitates to have the system similar to the one described by Finley and Brent *(Interaction trap cloning with yeast,* 169-203, *in* DNA Cloning, Expression Systems : a practical Approach, 1995, Oxford Universal Press, Oxford), and a cDNA library to find the preys at one's disposal.

It would therefore be much advantageous to be able to have a protein array covering a whole range of proteins (receptors, enzymes...) at one's disposal and to test different compounds on said protein array. This would allow to detect in one experiment which proteins interact with the tested compounds. Said compounds could therefore be proteins (to find protein-protein interactions) but also of other kind, such as chemical compounds, that can be used as drugs, peptides, lipids, carbohydrates, or hybrid (peptide-lipid, peptide-sugar...) compounds. It is envisioned that library of small compounds could be tested in high throughput screening, after the identification of interesting pharmaceutical targets, such as receptors.

At the present time, it is difficult to perform such analysis, as the labeling of small compounds is not easy to perform routinely, and as labeling of the compounds could also hamper the interaction between the proteins on the chip and the labeled compounds.

The existing system have no real answer to the problems. As will be seen, the present invention allows the full exploitation of the intrinsic capacity of the biochip arrays, regardless of the nature of the probes fixed to the slide (DNA, protein, other kind of compounds).

It is an internationally widespread opinion among the users of said systems that they are still to be improved. This is particularly true in the functional analysis of tumor cells and in the expression thereof. Therefore, the present systems are mainly used for trial purposes. The present invention will allow their application on a larger scale with relevant consequences in the clinical and therefore social field.

The systems for reading the expression and experimentally for reading the sequence, that are marketed at present, are nearly all markers-based, except for some exploiting mass spectrometry, a very expensive and badly flexible system and anyway unsuitable for simultaneous detection. As examples, we can take those company using fluorosced substances such as Affymetrix, Molecular Dymanics, Nanogen Protogene, Synteni, or even radioactive substance, such as Hyseq, Incyte or also mass spectrometers (Brax, Sequenom). All those systems are very expensive and require time for the preparation and scanning thereof. The most advanced and fastest systems are those by Virtek and Asper. The latter, still in a trial phase, uses a CCD (Charge Coupled Device) detector that is expensive, requires cooling and is at least 1000 times slower than the one proposed here.

Some previous patents in fields similar to that of the present invention have been filed.

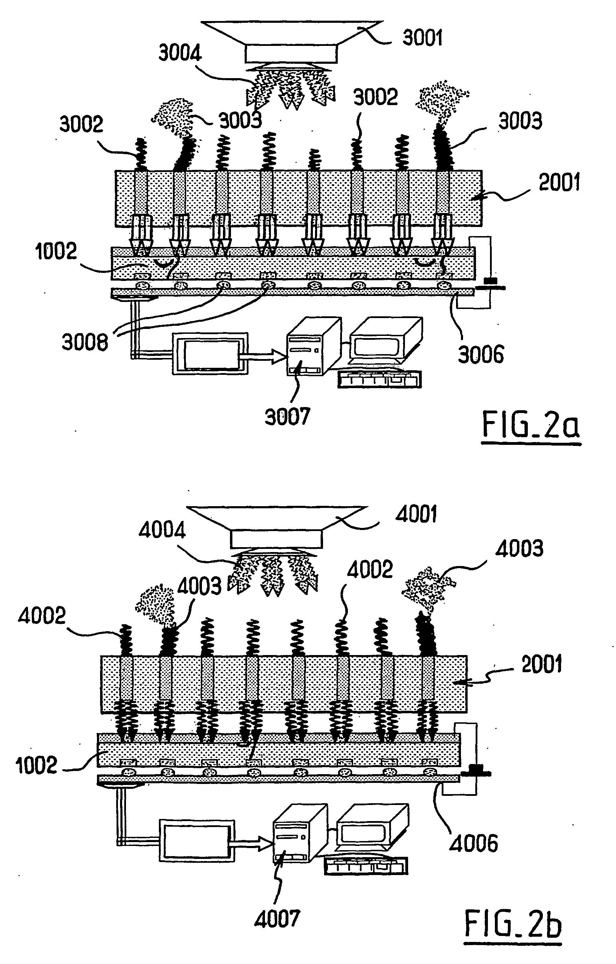

In W0- 96 07917, filed by Nanogen and published on 14 March 1996, an electronic system having a plurality of electrodes for the detection of molecular processes is disclosed. The detection occurs by electric induction, i.e. by transport of charges or current from a position at the hybridization site to one at a collection circuit (figures 2.b).

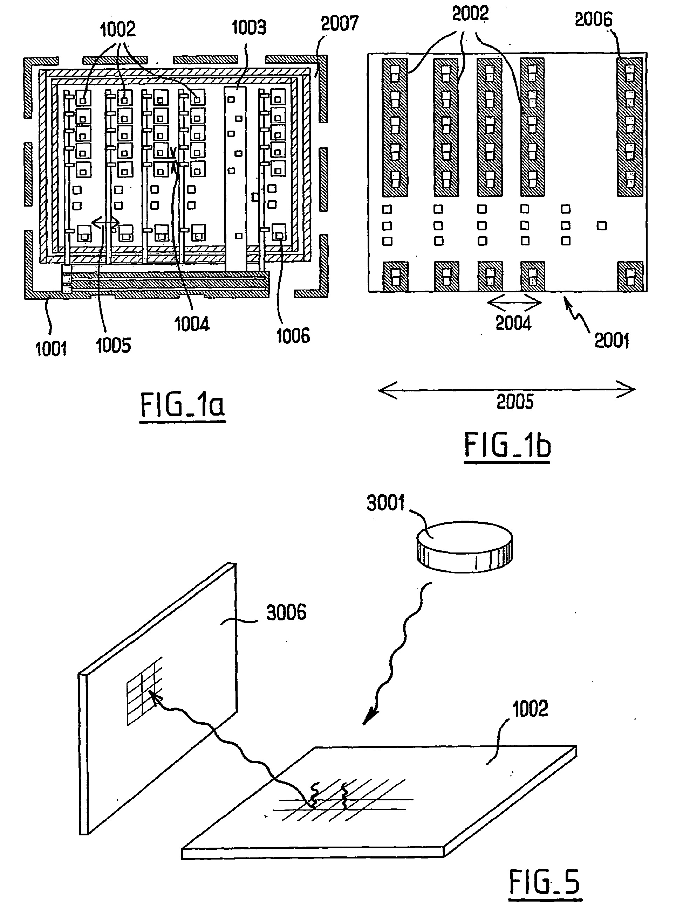

In WO- 99 32877, filed by Spectrumedix and published on 1 July 1999, discloses a detection system comprising a transmission grating beam splitter (TGBS) (figure 1) that collects and reemits the beam towards a detector capable of distinguishing the hybridization sites from the analysis of interference figures collected by a CCD camera.

US-5 571 410, filed by Hewlett Packard and published on 24 April 1996 concerns a method and a system of analysis for the separation of biological molecules. It provides that among the detection methods there are those based on direct absorption and with markers but not for hybridization sites, or for molecules attached to supports, since they are in motion. This patent document presents the "Micro-Tas" system in general in its configurations and construction and implementation methods but not the detection thereof.

Another example of patent on the detection in biochip arrays or biochemical array systems as mentioned, is US-5 633 724 filed by Hewlett Packard and published on 27 May 1997. It is based on a scanning and detecting method with light by phases variation of the electromagnetic radiation after the latter is passed through some materials.

In US-6 017 435, filed by Imperial College and published on 14 November 1996, the detection is performed by electrophoresis using moving molecules. This takes place by absorption and provides the reading of the yes/no answer in the presence of the molecules.

Various patents of the above-mentioned companies concern the methods for the deposit in a matrix geometry and the reading thereof. As already mentioned, these methods are very specialized. The reading or detection system is specific to the deposition one. The patents filed by Affymetrix concerning said systems are an example. For instance US-5 968 740 describes a detection method of the sites and of the use of the degree of expression. The reading shown in figure 13 uses a scanning system having markers.

None of these Affymetrix patents concern the present invention that does not strictly deal with the reading of information of biological type (for example a mutation from the comparison of different expressions from different hybridization sites), but with the detection of the sites and the quantification of the hybridization.

The most significant publications in similar fields are the following.

The detection through irradiation with electromagnetic radiation of molecular substances is well known since the very beginning of molecular biology. We use commonly the radiation described in a limited field of application of the present invention in the interval between around 190nm and 300nm (F-UV) previously described, and the one between around 300nm and 700nm (UV). In particular, this goes under the name of molecular imaging or simply UV imaging, meaning often the interval more properly indicated here as EUV. Said methods use the physical principle of the absorption of molecules marked or not with more or less harmful markers (EtBr, P etc.).

For example P. Clarke et al. (Analytical Biochemistry 124, 88-91 (1982) "Ultraviolet Imaging: a simple method for detecting nucleic acids in preparative gels"), described a method with electrophoresis gels. They rely on works on the measuring of absorption performed, among others, by M. N. Kiseleva et al. (Biofizika 20: No. 4, 561-565, 1975,"Absorption spectra of nucleic acids and related compounds in the spectral region 120-280nm") i.e. on a well known and measured physical phenomenon which a part of the present invention relies upon. Analogously does S. M. Hassur et al. (Analytical Biochemistry 59, 162-164 (1974) "UV shadowing- a new-and convenient method for the location of ultraviolet-absorbing species in polyacrylamide gels"). These publications refer to the detection of gel fragments of molecules of different natures (nucleic acids and similar compounds). The publication of M. N. Kiseleva et al. provides a more general overlook, but does not provide for any system.

In A. Mahon (IEEE NSS Conf. Rec. 3, 1462 (1996)) the method of S. Hassard et al. is presented with an example of molecules detection thanks to the movement thereof.

In A. Mahon et al (Phys. Med. BioL 44 (1999) 1529-1541), the results of detection of the occurred absorption of DNA fragments in electrophoresis through CCD detectors are presented, just like in US-6 017 435. The system is not sensitive enough to detect the difference of a pair of bases, a difference which is necessary to determine the sequence.

WO 99/27140, Vo-Dinh, T. et al. ("DNA Biochip using a phototransistor integrated circuit" Anal. Chem. vol. 71 358-363 (1999))and Vo-Dinh ("Development of a DNA biochip: principle and applications" Sensors and Actuators vol. 51 52-59 (1998))disclose DNA biochips comprising photosensors, amplifiers, discnminators and logic circuitry as well as methods of using said chips for the detection of labelled nucleic acids hybridising to probes immobilised to the surface of said chips.

An object of the invention is to provide a method which make it easier and faster to detect a position of several hybridization sites on a support and to quantify the targets so hybridized, especially the level of hybridization.

Accordingly, the invention provides a method according to claim 1.

Accordingly the results can be obtained for all the sites simultaneously, making scanning an optional operation.

By "quantifying the targets", is meant the operation of determining if an hybridization of target took place or not at each site, and optionally studying the hybridization that occurred as to the amount of targets hybridized at the site, the nature of the targets, their spatial disposition, etc

The method of the invention may also show at least one of the features according to claims 2 to 8.

The method of the invention can be performed with a device showing at least one of the following features:
- the detector is arranged to receive the radiation after it passed through the support;
- the means for quantifying are arranged for determining the amount of hybridized targets at some sites;
- the source is a gas discharge lamp;
- the source is a laser source, preferably a semiconductor one or a gas one;
- it comprises a lens or a system of lenses arranged in the path of the radiation, before or after the support;
- it comprises a micro-lenses system arranged, in the path of the radiation before or after the support, to allow the passage of the maximum intensity of the incident radiation;
- it comprises a monochromator or filter system for the selection of the passing energy of the incident radiation before or after the support;
- the means for quantifying comprises an electronic reading circuit connected to the detector, preferably welded or glued directly to the detector or grown directly from the detector;
- the electronic reading circuit is of the VLSI ("Very Large Scale Integrated") design type;
- the microelectrode detector is formed by junctions on a semiconductor material;
- the semiconductor material is chosen from the group consisting of: high resistivity Silicon, synthetic Diamond, a Gallium-based compound, or a compound containing Gallium and Aluminum;
- the semiconductor has contacts implanted to form junctions in diode type configurations;
- the distance between the microelectrodes is substantially the same center to center as the distance between the hybridization sites;
- the distance between the sites and/or between the microelectrodes is in the interval ranging from 1 micrometers to 1 centimeter;
- the means for quantifying is arranged to transform the charge into electric current;
- the means for quantifying comprises an amplifying system;
- the support for the probes is made of glass with thin films of another material; and
- the support for the probes is made a plastic polymer.

Other features and advantages of the invention will appear in the following description of preferred embodiments thereof with reference to the drawings on which:
- figure 1a shows a pixel matrix detector of one embodiment of the device used to perform the method of the invention
- figure 1b shows a matrix forming a biochip array of the device of figure 1;
- figure 2a illustrates an embodiment of the device used to perform the method of the invention which does not use markers;
- Figure 2b illustrates an embodiment of the device used to perform a method of detecting hybridisation using markers
- Figure 3a is an exploded perspective view of an embodiment of the device used to perform the method of the invention
- Figure 3b is an assembled perspective view of the device of figure 3a;
- Figure 4 is an actual visualization of the device used to perform the method of the invention;
- Figure 5 illustrates schematically another embodiment of the device used to perform the method of the invention.

Instant invention provides a method detecting a position of several hybridization sites on a support containing deposited probes having hybridized targets remaining attached thereto after a washing step. The method comprises the steps of:
- emitting a radiation from a source towards the support;
- emitting the radiation coming from the support on a microelectrodes detector system sensitive to the radiation; and
- quantifying the targets in different sites of the support at the same time. The invention consists in a method for the detection of the position of several hybridization sites. The targets are molecular compounds such as nucleic acids, DNA, RNA, proteins, synthetic PNA etc. The invention may perform such detection for example in thousands of different sites at the same time through the quantification of molecules with a microelectrodes detector system sensitive to the radiation acting directly from the source to the support of the hybridized molecules and therefore on the detector, for example after having passed through it. The support contains deposited probes and hybridized targets that remained attached after the washing. The system comprises a detector detecting the position using electromagnetic radiation or nuclear decay, the first preferably in the interval between leV and 6 eV.

More precisely, the system comprises a radiation source. Different kinds of radiation sources can be used according to the sensitivity of the detector coupled to that source.

The system comprises a support where the hybridization takes place. This support can be made of glass, plastic polymer, nylon with or without glass, sapphire, synthetic diamond or quartz. The support can have a deposited film of synthetic material.

The system comprises a detector preferably in the form of a wafer, formed by a preferably semiconductor material where a ionization reaction caused by the incident radiation takes place. The wafer houses micro-electrodes, preferably diodes, obtained by junctions or micro-implantation and capable of collecting charges generated by the ionization or a current on an electronic circuit preferably integrated ("VLSI" "Very Large Scale Integrated"). The electrodes could be microdiodes having a distance between them equal to that of the centers of the sites where hybridization is intended to take place. The diodes can be dozens of thousands.

The system preferably comprises a compact integrated circuit reading for example the charge or the current created by the ionization and, if separated from the detector wafer, having bump contacts towards diodes, preferably (but not necessarily) equally distanced between them.

The radiation source is placed above or under the support of the probes, completely irradiating it. The radiation source is followed by the detector to which the integrated circuit is possibly attached or welded. The information collected by the electronic circuit is digitized and transferred to a normal electronic processor of the most recent type.

The method consists in detecting the sites where took place the hybridization of the probes attached to the support with targets successively deposited and that are to be studied. Some of the targets hybridize, others do not. Afterwards, a washing operation removes the targets which did not hybridize. Then the support is irradiated, possibly for less than a second, the exact time being determined by taking into account the number of hybridization sites and the reading.

All the hybridization sites and the reading elements (preferably diodes) are simultaneously irradiated. Each diode (or electrode) collecting the radiation has a position corresponding to the probe of the glass support though which this radiation passes.

More detailed embodiments of the system used to perform the method of the invention are described hereafter.

With reference to figure 1a, the diagram 100 is a pixel matrix detector 1002. The detector comprises pixels formed of electrodes or more complex systems 1006 on a wafer of semiconductor material having a rectangular shape. But it could alternatively have the shape of a disk or a square. The pixels are disposed in columns spaced apart one from the other. The distance 1004 between pixels of a same column is for example the same as the distance 1005 between columns. It may range from a few microns to few centimeters. The detector comprises in this case collecting lines 1003 to collect the electrical signals generated in the pixels and bring them outside in an electronic circuit.

With reference to figure 1b, the diagram is an example of a scheme of a matrix forming a biochip array 2001 with adhesion sites 2002 of probes for hybridization between probes and targets. The sites are also organized into columns. The distances 2004 between them are equal to those between the columns of pixels. The distance between adjecent sites is the same as the distance between adjacent pixels. The sizes of each side 2005 of the array here follows those of the detector, although it does not need to be necessarily equal. Such sizes are chosen to house a number of sites equal at most to the number of detector pixels. The edges of the biochip 2006 and of the detector 2007 depend from simple construction constraints and are such as to allow detector and biochip to overlap. The drawing is not in scale. The sizes of the sides 2005 range from some millimeters to dozens of centimeters. When the biochip is superposed to the detector, the sites are respectively in correspondence with the detector electrodes, as shown on the other figures. To each pixel corresponds a hybridization site. Of course, other spatial arrangements of the pixels may be imagined (in lines, arrays, isolated pixels, etc.)

Figure 2a illustrates an embodiment of the system of figures 1 a and 1b which does not uses markers. The source 3001 is a discharge, electrodes or plasma lamp or even a gas, semiconductor, or plasma laser, emitting in one or more of the wavelengths of maximum absorption for the elements which the irradiated molecules are composed of. In this example, the source lays above the support. The source irradiates all the probes of biochip 2001, that is to say the probes 3002 which remain alone as well as the probes associated with hybridized targets 3003. The radiation 3004 passes first through them (at the biochip stage) then reaches the detector 1002 disposed under the biochip 2001. In the detector 1002, the semiconductor is ionized by the radiation and generate charges that are collected and transferred to a digital integrated circuit 3006 capable for example of quantifying the amount of absorbed radiation energy at each site. The electronic circuit is soldered to the detector with bumps balls 3008. The results are processed by computerized processing means 3007.

Figure 2b illustrates an embodiment of the system which uses markers. The source 4001 is a discharge, electrodes or plasma lamp, or is a gas, semiconductor or plasma laser emitting in one or more of the wavelengths of maximum absorption and re-emission of the markers that the molecules of the irradiated organism or compound are mixed with. In the example, the probes 4002 which did not hybridized as well as the probes having hybridized targets 4003 are irradiated. The radiation 4004 passes first through them, then reaches the detector 4005. The detector 2001 is formed by a semiconductor which is ionized by the radiation and in which charges are generated, collected and transferred to a digital integrated circuit 4006 capable of quantifying the amount of radiated energy per wavelength. Again, the results are processed by computerized processing means 4007 comprising for example a standard PC.

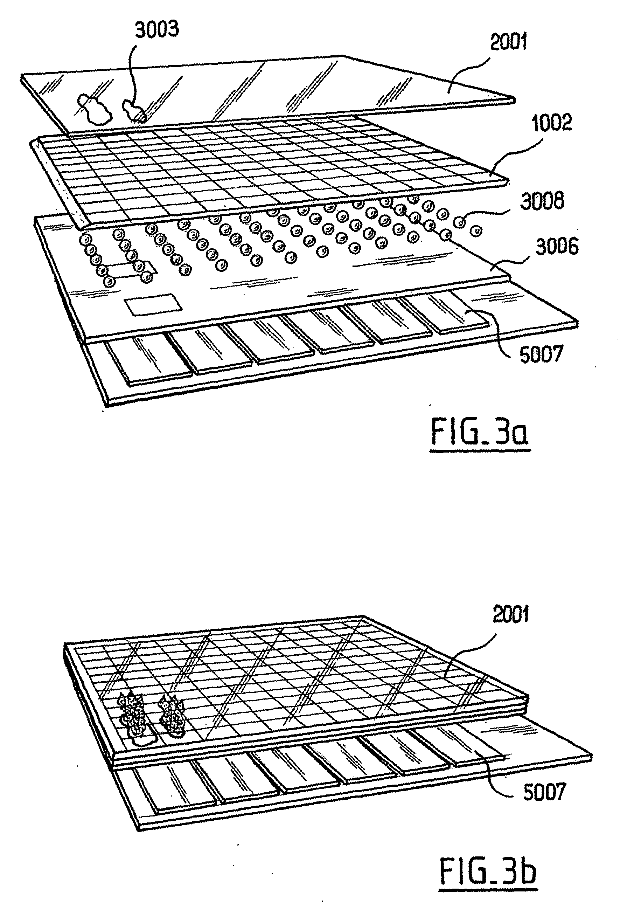

The embodiment of figure 2a is shown on figure 3a in exploded view and . Circuit 3006 is a VLSI electronic circuit. The spherical members 3008 are weldings for binding the biochip 2001 to the detector 1002, placed on top of the circuit 3006, below the biochip 2001 represented in see-through effect with hybridized targets 3003. Probes with or without targets are placed at every square. The embodiment here also comprises cards 5007 for further digitalization and transfers of the data to a processor which can be comprised or not in the circuitry. Figure 3b shows the same elements as figure 3a now assembled. The sizes follow those of the examples la and 1b.

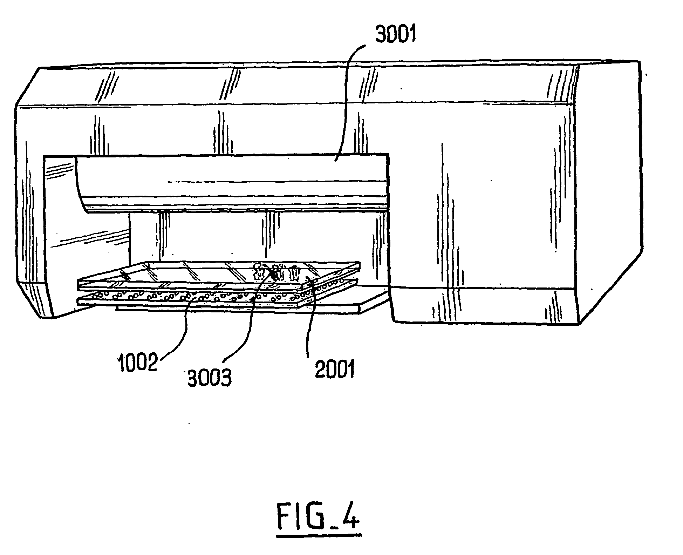

In figure 4 are shown schematic visualization of the final system by way of example only. It show the described source 3001 (for example a UV source) included in a casing having an opening for receiving the hybridization targets 3003 on the glass support 2001 and the circuit assembled to the detector 1002.

As the targets do not contain markers, the quantity of charge depends on the number of hybridized molecules. In particular, the smaller the charge, the larger the number of hybridized molecules and viceversa. If the targets are marked, we can determine the degree of attachment by considering the quantity of charge collected by the detector on the possible energy interval of the re-emitted radiation. Indeed, the intensity of the collected radiation depends on the size of the hybridized fragment. If the targets contain a fluorescent substance, the radiation will be re-emitted with a different energy according to the substance and the quantity of target actually attached to the probe. If an energy interval is to be selected, we can interpose a suitable monochromator radiation or a series of filters, both between the source and the support and between the support and the detector, to take into account detector with embedded energy selection by the material deposited into them. This material may be for example a compound of Al, Ga and N. See for example J. L. Pau et al. "High visible rejection AlGaN photodetectors on Si(111)
substrates" Appl. Phys. Lett. 76, 2785 (2000) E. Monroy et al. "AlxGal - xN:Si Schottky barrier photodiodes with fast response and high detectivity" Appl. Phys. Lett. 73, 2146 (1998)
M.Razeghi et al., "Semiconductor ultraviolet detectors" J. Appl. Phys.79, 10 (1996) 7433-7473

The collecting electrical elements (electrodes or diodes) are fixedly positioned, one for each probe site. Knowing which probe was placed in a certain site of the support and confronting which sites are identified as hybridized, since they are simultaneously associated with a respective electrical signal, it is possible to determine the gene expression if suitable probes were deposited. The method can generally apply to any type of probe adhering to glass supports, polymer or quartz or the like, with or without further deposits, e.g. polymerized ones. For example we can use oligonucleotides, DNA for gene mutation profiles or extract of tumor cells to study the attachment of basic substances for anti-tumor drugs etc.

The distance between the detection elements can be any up to some dozens of micrometers in both directions transversal to that of the incident radiation. At present, it is the technology implantation in the integrated circuits that limits such size to around 50 micrometers or a little less. The transversal sizes of the glass support, of other alternative support or of the semiconductor wafer have no specific limits, and should they have some, they would not invalidate the field of applicability of the method. The limitation can come either from mechanical and construction limits of the machines which hybridize or deposit the probes or from the machines creating the semiconductor wafer. At the moment, those latter technologies can allow the creation of systems up to 32 centimeters. Not even the thickness of the detector and support is limiting for qualifying to the operation, validity and applicability of the method of the invention.

The system uses semiconductor detectors. But the detectors could also comprise position sensitive photomultipliers that are hybrids of photomultipliers and semiconductor detector, known per se in other fields. The system may comprise filters integrated to the detector or fixed thereto, for automatically selecting wavelenghts. Multianode photomultipliers may be used, for example those of Catalogue HAMAMATSU CORPORATION March 2001Example product H6568

In case of semiconductor detectors, they can be at low or high (direct or indirect) gap and can also be natural or obtained synthetically from alloys. The composition and treatment thereof change the detection potential. Some of those materials can be considered as "insulators" rather than real "semiconductors" according to certain nomenclatures. They are all comprised in the field of this invention. For example synthetic Diamond is comprised. The same can be said for compounds containing Indium, Aluminum, Gallium and Silicon, with or without Nitrogen. Said materials can be voluntarily or involuntarily enriched and may therefore contain other atoms of different natures. Their degree of purity depends from many requisites: cost, availability and ease of manufacture. In the field of the present invention, the advantages of those materials lie in their ability to be ionized by the incident radiation and let the produced charge be mostly transferred inside said materials without being reabsorbed. This is possible thanks to an electric field applied from end to end. The field can be applied in a top-bottom configuration or transversally in the same surface.

In the most common applications, the material is produced in the form of thin disks having a diameter that varies between 3cm up to 10cm or more. The thickness of the disks is measured in microns, from one to more than one thousand (several millimeters).

In order to detect the radiation, different methods may be used; The most common of them are the simple deposit of films forming the electrodes to which the electric field is to be applied or the deposit of more complex compounds in order to obtain suitable contacts so as to collect a sufficient charge and not have a too loud background noise. For example, in the case of Diamond, the first method can be used, whereas with enriched Silicon (of the "n" or "p" type) junctions. electrical configurations of the "diode" type, can be used. These methods form electrodes and the detector is called ionization detector. The electrodes can be of different shapes, such as long stripes or rectangles or squares, having a size comprised between ten and several hundred microns. They can form a structure that repeats itself until it covers the entire surface of the disk.

The advantages of the present invention lie in the use of said materials for the detection of the radiation passing through the biochip. Thus the field of the present invention concerns the use of these detectors with biochips. In particular, the man skilled in the art will pay attention to the adjustment of the material for the optimization of the signal, the adjustment in size of the electrode (or "pixel") to that of the site where hybridization is presumed to take place and the adjustment in size of the disk successively cut into sizes that are of use for those used in the biochip for the deposit of probes. Said pixel detectors on semiconductor are relatively little used and the marketing thereof is limited. Currently they are sometimes called CMOS (Combined Metal Oxide Silicon) detectors. However, the present invention uses all those detectors in their most common definition, since among the detectors herein described there are several times combinations of metal and silicon oxides.

All these detectors can be read with common laboratory instruments measuring a variation in the quantity of charge or current (quantity of charge in time) in the hybridized sites with respect to that in non hybridized sites. Not only is the variation measured, but so is the value thereof. This detection is an integral part of this invention. This allows to evaluate how many molecules hybridized at a same site (possibly containing a plurality of probes) and the position thereof as well as how much sites provided the evaluation of a given expression and which sites.

The field of the present invention uses also, but does not make it an essential requisite, the reading system based on an integrated electronic circuit (VLSI) for the digitalization of the hybridization information. However, one should take into consideration that, although this system is used in many embodiments of the invention, it is not the only possible system for the digitalization of the signals for the simultaneous detection of the hybridization sites.

The operative features of the circuit depend on the features of the system, in particular on the type of probes and targets used, thus on the type of radiation and the power of the radiation source. The circuit will have different features also depending on the application thereof and if markers are comprised or not and which ones they are.

The circuit can collect the charge in an interval ranging from dozen of nanoseconds to milliseconds and allows to count how many photons actually reached the detector. The value of the energy for each one of them (i.e. the wavelength thereof) is sorted out through any suitable and already known arrangement of transistors.

The application of the circuit to the radiation that passed through the biochip forms one of the innovation fields of the present invention.

The circuit, manufactured on every technology which is deemed suitable (the present ones are defined between 0.6 and 0.13 micron), depends most of all on the geometric properties of the microchip taken into consideration.

The circuit is also produced on a semiconductor disk. It can be the same size as the detector or larger or smaller. In this latter case, it shall be arranged in a domino configuration. The circuit is then cut and assembled to the detector through industrial welding techniques. It is also possible to adopt methods available on the market for the transfer to a further information processing system up to visualisation on a screen, such as a personal computer. These solutions are only examples. The invention leads to information which can be processed for genetic or other considerations.

The present invention intends to have a general character and to be applicable to a wide range of biological compounds, however deposited, and on any of the surfaces used at present (polymers, glass, crystals etc. all coated and/or treated or not).

Measurement of the current in high resistive silicon detectors having semiconductor connections mounted thereto and polarising the detector with an inverse voltage tension are reported herebelow as a non limiting example of the sensitivity of the system. For a DNA fragment having 70 pairs of basis, a current variation with or without lighting ranging from 1nA to 20nA per 250 pair of basis at around 260nm was detected. For oligonucleotides fragments hybridized in glass of the "coming glass" type, a current variation of around 100nA was detected.

The proposed method is more cost-effective, reliable and faster than the methods used at the moment in laboratories in a trial mode and the commercial methods. The system brings to the widest spreading and use of biochip, DNA chip or biochip array micro-systems, differently known in the field without having a more definite definition.

The advantages of instant invention are numerous. They are substantially, but not only, based on two innovations: the simultaneous detection of all the hybridization sites and the potential elimination of the markers. The second innovation does not exclude the first and viceversa. The advantages of the simultaneous detection are obtained also when markers are used. Analogously, the advantages of detection without markers can be obtained also without the simultaneous detection. The present invention comprises both solutions since it is based on semiconductor detectors with direct reading of current or charge.

The advantages of simultaneous detection are huge: ease of engineering and use of the system, and low cost. In order to obtain them, it is necessary to illuminate a few and preferably all the hybridization sites simultaneously. The proposed system provides a suitable irradiation according to the radiation source used. Different kinds of the latter, with suitable optical systems, are possible. Another requisite for simultaneous detection is that the corresponding signals be collected simultaneously. In order to obtain this, to every hybridization site must correspond a single reading element. The use of a pixel detector in which every pixel corresponds to a hybridization site is among the innovations of the present invention.

A quick detection of the hybridization allows to obtain a larger quantity of information in very small time intervals, of around a microsecond, about the expression of a large quantity of genes. This speeds up and eases the task to a large number of clinical and pharmaceutical researchers. The present invention allows a full exploitation of the biochip advantages.

The invention allows to obtain the detection of the radiation transmitted after the absorption. Obviously, also a radioactive radiation can be detected, although this is less and less used. Are also in a trial phase the systems emitting single particles from nuclear processes, such as the production of pairs of electrons, positrons or nuclear fragments and the production of electromagnetic radiation at high energies (more than 6eV and up to a few GeVs). The present invention covers all these types of radiation. For the above mentioned reasons, it covers the detection in wavelength intervals from around 700nm up to 190nm since at the moment this implementation of the proposed method is the more immediate.

We saw that the absorption of the radiation passing the biochip can be detected. Every deposit and hybridisation site will absorb the incident radiation in a different way. The sites wherein the hybridisation took place will absorb more than those where only the attached probe remained. Furthermore, the absorption among hybridisation sites, which is directly proportional to the number of molecules they hybridised, will vary from site to site. Therefore, the degree of hybridization will be measured by the radiation, for example the number of photons, arriving to the detector, i.e. by the quantity of charges that are generated in the semiconductor and collected by the electronic circuit that performs the digitalisation after a reading of the analogue type.

An advantage of the detection without markers is that the measuring is direct and possibility analogue. The image is sharper with respect to the reemission of fluorescence that, on the other hand, is isotropic and therefore is largely distributed in space. Furthermore, the amount of absorption is a well-known function of all the materials used, so that the results can be quickly verified through the estimation by mathematical models. On the contrary, the reasons for absorption and reemission of fluorescent substances attached to probes or targets are not really well known. Many causes can influence the attachment, the stochiometric occupation being the main element. Then there are thermodynamic conditions that are to be fulfilled in order to verify that the results match theory, and this depends strongly upon the trial itself. Moreover, the use of fluorescent substances is less attractive also for physical and chemical reasons and for the cost thereof. Such conditions apply to the use of all markers in general.

According to the invention, the absorption measurement can be performed in a broad energy spectrum. The source must be suitably chosen on the basis of the probes and targets used. For example, in case of DNA-based hybridisations, the maximum absorption is obtained at a wavelength of around 260nm. Therefore, a source emitting its maximum intensity in that interval is the most suitable one. For instance, we can use sources existing on the market comprising Deuterium and Mercury, or suitable laser or plasma sources. Such sources are optimum also in terms of sensitivity. For the present invention, in the common use of biochip, a low intensity Deuterium source of those available on the market is perfectly suitable for the purposes. However, the method described in the present invention covers all the possible sources, comprising laser having a predetermined wavelength or a broad spectrum, as well as those coupled to filters or monochromators. The absorption can be measured also in a wavelength interval far from the absorption of the basis forming pure DNA (absorption peak at 265nm). The use of other sources can turn out to be convenient both in terms of costs and required power or for other practical needs, comprising the motivation of observing a different absorption peak for more complex molecular masses such as proteins and other organisms.

In view of the above recited prior art, the advantages of the invention are the followings.

In W0- 96 07917, the detection cannot occur simultaneously. In particular, the provided collection circuit does not follow the geometry of the pixels as is the case in this invention.

With respect to the present invention, the detection system of US-5 633 724 is not that of direct irradiation of the sample, nor does it perform the detection simultaneously or at the same time with the irradiation. The irradiation can also occur simultaneously, but the detection occurs through scanning and is indirect. The detection is performed in the radiation part which is successive to the internal reflection (TIR "Total Internal Reflection") on the inner part of the substrate where the molecules are deposited. On the contrary, in present invention, the radiation preferably reaches the detector after having passed through the support (or substrate) thereof.

Document. US-6 017 435 does not provide the chance of using pixel detectors reading the charge or the current. The chance of measuring the absorption is not provided. It can only be affirmed that it took place by detecting the presence thereof by identifying light and shadow areas through which the molecules went. This event can be indicated as a current variation with respect to a determined level, but it does not quantify the molecular mass. Furthermore, the application to biochip arrays is not provided. It does not disclose a system such as that used for the method of the present invention where not only the position for the identification of the site is enabled, but also the quantification of how much molecular mass is present in that position. This is possible in the present invention thanks to the analogue reading of the detector charge through the electronic circuit. Furthermore in US-6 017 435 the detection assumes the moving of the analysed molecules. The use of the pixel detectors is only to say if the molecule in electrophoresis movement has passed or not. So the document foresees a digital detection, not an analogue evaluation for quantification of the charge in the circuit.

The present invention differs from the device of W0- 99 32877 since the detection refers to radiation of any kind, not only to the optical one (detection for photons in wavelength intervals of around 500-1000nm). Furthermore, this device performs said detection only on fluorescent substances.

The device provided by A. Mahon et al (Phys. Med. Biol. 44 (1999) 1529-1541) has a detection limit depending upon the mass of around 1ng. Said limit is not prejudicial to the present invention which can detect fragments of smaller sizes.

None of the existing devices performs simultaneous detection of all the sites for a standard size of slide. In the current state of the technology, the standard slides used in micro array have a side of about 1 or 2 cm and thousands of probes attached thereto. Therefore, no current system could be compared with that used for the method of this invention which enables the simultaneous and multiple detection on thousands of sites as will be explained. The present technology of the detector proposed here would allow even 5 million or more of detection sites. Furthermore, it permits detection without the use of markers.

The invention permits to obtain on a screen by means of computer means an actual and real time representation of the status (hybridised or not) of each site of the support. The same computer means can process these information and analyse (and display) the evolution of each site along time. Successions of images of the support at different moments, for example every 20 microseconds, could be obtained. If the support is irradiated continuously and the signal continuously processed and displayed, a camera-like representation of the support is possible, permitting to follow in real time the evolution of each site. Accordingly, the invention permits a dynamic treatment of the experiment results. Comparing the results of some of the sites permits to calibrate efficiently the device and also to recalibrate it during the trial. It permits to detect the sites where an hybridisation occurred and also, by comparing such sites between them, to determine the amount of targets at the respective sites. The invention avoids the delay for scanning.

The invention may be applied in such field as genomics, proteomics, etc.

Another embodiment is illustrated on figure 5 showing the radiation emitted by the source 3001 impinging on the sites of the biochips 1002 with probes and possibly targets. The radiation then goes to the detector 3006 without passing through the biochip. Fluorescent light can be used in this case. This embodiment may be perform using the technology of the BIACORE company, known per se.

The invention may show other features such as the followings:
- the device may comprises a micro-lenses system of a material suitable to allow the passage of the maximum intensity of the incident radiation arranged in the path of the radiation before or after the support.
- interposed before or after the support, a monochromator or filter system may be provided for the selection of the passing energy made in a material suitable to allow the passage of the maximum intensity of the incident radiation;
- the means for quantifying (the reading electronic circuit) may transform the charge into electric current or transports the charge directly to the amplifying system with or without a capacity and/or resistive filter.

The invention also provides a method for detecting a position of several hybridisation sites on a support having hybridised targets, the method comprising the steps of:
- emitting a radiation towards the support; and
- receiving the radiation coming from the support on a detector sensitive to the radiation.

This method may also comprise at least one of the following steps:
- determining the sites having hybridised targets; and
- calculating the amount of targets hybridised at each of these sites.

The method of the invention can be applied to non PCR treated compounds.

## Claims

1. A method for detecting hybridisation of probes and targets **characterized in that** it comprises the following steps:
- successively depositing targets that are devoid of markers to a support to which probes are attached,
- washing the support so that the probes which have not hybridized are removed leaving sites on the support at which targets and probes have hybridized,
- emitting a radiation towards the support from a source selected from the group of a discharge lamp, an electrode lamp, a plasma lamp, gas laser, a semiconductor laser and a plasma laser in one or more of the wavelengths of the maximum absorption of the elements of which the irradiated molecules are composed of at the sites, so that when the radiation passes through the said sites the energy is attenuated,
- receiving on microelectrode detectors the attenuated radiation which passed through the sites, so that a semiconductor is ionized by the radiation and charges are generated that are collected and transferred to a digital integrated circuit capable of quantifying the amount of absorbed radiation energy at each site,
- simultaneously quantifying the hybridization of the different sites on the support by quantifying the charge generated by the respective microelectrode detectors.

2. The method of claim 1, **characterized in that** it comprises the step of receiving a radiation from a site of the support at different moments, and preferably quantifying the evolution of hybridization at this site along time.

3. The method of any of claims 1 to 2, **characterized in that** the quantification step comprises the step of counting a number of photons arriving to one of the detectors from a site.

4. The method of any of claims 1 to 3, **characterized in that** the targets and/or probes are taken from the group consisting in: DNA fragments, RNA fragments hybrid systems such as PNA (Peptide Nucleic Acid), protein fragments, synthetic oligonucleotides, and synthetic oligopeptides.

5. The method of any of claims 1 to 4, **characterized in that** the radiation is electromagnetic and lays in the energy interval going from 1 eV to 6 eV.

6. The method of any of claims 1 to 5, **characterized in that** the radiation is electromagnetic and has wavelengths situated between 190 nm and 300 nm.

7. The method of claim 6, **characterized in that** the targets are PCR("Polymerase Chain Reaction")-amplified molecules.

8. The method of any of claims 1 to 5, **characterized in that** the targets are untreated molecules such as simple cellular lysate extract.

## Patentansprüche

1. Verfahren zum Nachweis der Hybridisierung von Proben und Targets, **dadurch gekennzeichnet, dass** es die folgenden Schritte umfasst:
nacheinander Ablagern von Targets, die keine Marker aufweisen, an einem Träger, an dem die Proben gebunden sind,
Waschen des Trägers, so dass die Proben, die nicht hybridisierten, entfernt werden, und Stellen auf dem Träger zurücklassen, an denen Targets und Proben hybridisiert haben,
Emittieren einer Strahlung auf einen Träger von einer Quelle, ausgewählt aus der Gruppe einer Entladungslampe, einer Elektrodenlampe, einer Plasmalampe, einem Gaslaser, einem Halbleiterlaser und einem Plasmalaser, in einer oder mehrerer der Wellenlängen der maximalen Absorption der Elemente, aus denen die bestrahlten Moleküle bestehen, auf die Stellen, so dass, wenn die Strahlung durch die Stellen dringt, die Energie abgeschwächt wird,
Empfangen der abgeschwächten Strahlung, die durch die Stellen gedrungen ist, auf Mikroelektrodendetektoren, so dass ein Halbleiter durch die Strahlung ionisiert wird, und Ladungen generiert werden, die gesammelt und auf einen digitalen integrierten Schaltkreis übertragen werden, der in der Lage ist, die Menge der absorbierten Strahlungsenergie an jeder Stelle zu quantifizieren,
gleichzeitiges Quantifizieren der Hybridisierung der verschiedenen Stellen auf dem Träger, indem die von den jeweiligen Mikroelektrodendetektoren generierte Ladung quantifiziert wird.

2. Verfahren nach Anspruch 1, **dadurch gekennzeichnet, dass** es den Schritt des Empfangens der Strahlung von einer Stelle auf dem Träger in verschiedenen Augenblicken, und bevorzugt Quantifizieren der Entwicklung der Hybridisierung an dieser Stelle im Laufe der Zeit, umfasst.

3. Verfahren nach einem der Ansprüche 1 bis 2, **dadurch gekennzeichnet, dass** der Quantifizierungsschritt den Schritt des Zählens der Anzahl der Photonen, die bei einem der Detektoren von einer Stelle ankommen, umfasst.

4. Verfahren nach einem der Ansprüche 1 bis 3, **dadurch gekennzeichnet, dass** die Targets und/oder Proben aus einer Gruppe genommen werden, bestehend aus: DNA-Fragmenten, RNA-Fragment-Hybridsystemen, wie etwa PNA (Nucleinsäureshomologes mit Peptidrückgrat), Proteinfragmenten, synthetischen Oligonucleotiden und synthetischen Oligopeptiden.

5. Verfahren nach einem der Ansprüche 1 bis 4, **dadurch gekennzeichnet, dass** die Strahlung elektromagnetisch ist, und in einem Energieintervall zwischen 1 eV und 6 eV liegt.

6. Verfahren nach einem der Ansprüche 1 bis 5, **dadurch gekennzeichnet, dass** die Strahlung elektromagnetisch ist, und eine Wellenlänge hat, die zwischen 190 nm und 300 nm liegt.

7. Verfahren nach Anspruch 6, **dadurch gekennzeichnet, dass** die Targets PCR-amplifizierte ("Polymerase-Kettenreaktion") Moleküle sind.

8. Verfahren nach einem der Ansprüche 1 bis 5, **dadurch gekennzeichnet, dass** die Targets unbehandelte Moleküle, wie etwa ein einfacher zellulärer Lysatextrakt, sind.

## Revendications

1. Procédé de détection de l'hybridation de sondes et de cibles, **caractérisé en ce qu'**il comprend les étapes suivantes :
le dépôt successif de cibles dépourvues de marqueurs sur un support auquel les sondes sont attachées,
le rinçage du support de façon à ce que les sondes qui ne se sont pas hybridées soient éliminées des sites de départ sur le support auquel les cibles et les sondes se sont hybridées,
l'émission d'un rayonnement en direction du support depuis une source choisie dans le groupe comprenant une lampe à décharge, une lampe à électrodes, une lampe plasma, un laser à gaz, un laser à semi-conducteur et un laser plasma dans une ou plusieurs des longueurs d'onde de l'absorption maximale des éléments dont les molécules irradiées sont constituées au niveau des sites, de sorte que lorsque le rayonnement traverse lesdits sites, l'énergie est atténuée,
la réception sur des détecteurs à microélectrodes du rayonnement atténué qui a traversé les sites, de sorte qu'un semi-conducteur est ionisé par le rayonnement et des charges sont générées, lesquelles sont collectées et transférées vers un circuit intégré numérique capable de quantifier la quantité d'énergie de rayonnement absorbée au niveau de chaque site,
la quantification simultanée de l'hybridation des différents sites sur le support en quantifiant la charge générée par les détecteurs à microélectrodes respectifs.

2. Procédé de la revendication 1, **caractérisé en ce qu'**il comprend l'étape consistant à recevoir un rayonnement depuis un site du support à différents moments, et de préférence à quantifier l'évolution de l'hybridation au niveau de ce site au fil du temps.

3. Procédé de l'une quelconque des revendications 1 à 2, **caractérisé en ce que** l'étape de quantification comprend l'étape consistant à compter un nombre de photons arrivant sur l'un des détecteurs depuis un site.

4. Procédé de l'une quelconque des revendications 1 à 3, **caractérisé en ce que** les cibles et/ou sondes sont issues du groupe comprenant : les fragments d'ADN, les systèmes hybrides de fragments d'ARN tels que PNA (Acide nucléique peptidique), les fragments protéiques, les oligonucléotides synthétiques et les oligopeptides synthétiques.

5. Procédé de l'une quelconque des revendications 1 à 4, **caractérisé en ce que** le rayonnement est électromagnétique et se situe dans l'intervalle d'énergie allant de 1 eV à 6 eV.

6. Procédé de l'une quelconque des revendications 1 à 5, **caractérisé en ce que** le rayonnement est électromagnétique et possède des longueurs d'onde comprises entre 190 nm et 300 nm.

7. Procédé de la revendication 6, **caractérisé en ce que** les cibles sont des molécules amplifiées par ACP (« Amplification en chaîne par polymérase »).

8. Procédé de l'une quelconque des revendications 1 à 5, **caractérisé en ce que** les cibles sont des molécules non traitées telles qu'un extrait de lysat cellulaire simple.
